# EUROPÄISCHE PATENTSCHRIFT

(11) **EP 2 268 543 B1**
(45) Veröffentlichungstag und Bekanntmachung des Hinweises auf die Patenterteilung: **30.10.2013**
(21) Anmeldenummer: 09737827.7
(22) Anmeldetag: 18.04.2009
(51) Int. Cl.: B64D 11/06, B60N 2/28

(54) **FLUGGASTSITZ MIT BEFESTIGUNGSVORRICHTUNG ZUR BEFESTIGUNG EINES KINDERSITZES**
AIR PASSENGER SEAT WITH A FASTENING DEVICE FOR FASTENING A CHILD SEAT
SIEGE DE PASSAGER D'AERONEF AVEC DISPOSITIF DE FIXATION POUR FIXER UN SIEGE D'ENFANT

(30) Priorität: 02.05.2008 DE 102008021999
(43) Veröffentlichungstag der Anmeldung: 05.01.2011
(73) Patentinhaber: Recaro Aircraft Seating GmbH & Co. KG, 74523 Schwäbisch Hall (DE)
(72) Erfinder: SVEN, Achilles, 74545 Michelfeld (DE)
(74) Vertreter: Daub, Thomas
(86) Internationale Anmeldenummer: PCT/EP2009/002840
(87) Internationale Veröffentlichungsnummer: WO 2009/132783

(56) Entgegenhaltungen:
- EP-A- 0 053 012
- US-A1- 2002 027 383
- US-A1- 2003 094 838
- US-B1- 6 485 102

## Beschreibung

### Stand der Technik

Die Erfindung geht aus von einem Fluggastsitz nach dem Oberbegriff des Patentanspruchs 1 sowie von einem Verfahren zur Befestigung eines Kindersitzes an einem Fluggastsitz nach dem Oberbegriff des Anspruchs 14. Dokument US 2003094838 offenbart ein solcher Fluggastsitz.

Es ist ein Fluggastsitz mit einer Befestigungsvorrichtung zur Befestigung eines Kindersitzes bekannt. Die Befestigungsvorrichtung umfasst ein Gurtsystem, das an einer Grundkörpereinheit des Fluggastsitzes befestigt ist.

Der Erfindung liegt insbesondere die Aufgabe zugrunde, einen gattungsgemäßen Fluggastsitz mit einer Befestigungsvorrichtung zur Befestigung eines Kindersitzes bereitzustellen, bei welchem eine besonders robuste und sichere Befestigung des Kindersitzes und ein hoher Bedienkomfort erreicht werden können. Dokument US 6485102 offenbart ein System zur Sicherung eines Kindersitzes in einem Fahreugsitz.

Diese Aufgabe wird durch die Merkmale des Anspruchs 1 gelöst. Weitere und Ausführungsformen sind in den Unteranspruchen enthalten.

### Vorteile der Erfindung

Die Erfindung geht aus von einem Fluggastsitz mit zumindest einer Grundkörpereinheit und einer an der Grundkörpereinheit befestigten Befestigungsvorrichtung, die zur Befestigung eines Kindersitzes vorgesehen ist.

Es wird vorgeschlagen, dass die Befestigungsvorrichtung eine Schnittstelle zum Anschließen an ein Befestigungsmittel des Kindersitzes aufweist, die mit der Grundkörpereinheit starr verbunden ist. Dadurch kann eine robuste und sichere Befestigung des Kindersitzes erreicht werden. Ferner kann der Bedienkomfort erhöht werden, da eine Justierung der Position der Schnittstelle relativ zur Grundkörpereinheit, die insbesondere bei einer Befestigung mittels eines Gurtsystems notwendig ist, entfallen kann. Unter einer "Schnittstelle" zum Anschließen an ein Befestigungsmittel des Kindersitzes soll insbesondere ein Teilbereich der Befestigungsvorrichtung verstanden werden, welcher bei einer Befestigung des Kindersitzes in Kontakt mit dem Befestigungsmittel des Kindersitzes kommt. Unter einer "starren Verbindung" der Schnittstelle mit der Grundkörpereinheit soll insbesondere eine Verbindung verstanden werden, bei welcher die Schnittstelle relativ zur Grundkörpereinheit unbeweglich ist. Insbesondere kann diese starre Verbindung mittels eines Verbindungskörpers, der die Schnittstelle mit der Grundkörpereinheit direkt verbindet und als starrer Körper ausgebildet ist, erreicht werden. Alternativ kann die Schnittstelle direkt an der Grundkörpereinheit befestigt sein. Eine besonders robuste Befestigung kann ferner erreicht werden, wenn die Befestigungsvorrichtung von der Grundkörpereinheit unlösbar ist. In einer weiteren Ausführung kann jedoch eine hohe Flexibilität in der Anwendung der Befestigungsvorrichtung erreicht werden, wenn die Befestigungsvorrichtung von der Grundkörpereinheit lösbar ausgebildet ist. Unter "vorgesehen" soll insbesondere speziell ausgestattet oder speziell ausgebildet verstanden werden.

Unter einer "Grundkörpereinheit" des Fluggastsitzes soll insbesondere eine Einheit des Fluggastsitzes verstanden werden, die aufgrund von ihrer Masse, ihren Abmessungen und/oder ihrer Anordnung im Fluggastsitz insbesondere eine tragende Funktion aufweist und/oder die gezielt zur Ableitung von Kräften vorgesehen ist.

Eine besonders robuste Befestigung der Befestigungsvorrichtung kann erreicht werden, wenn der Fluggastsitz eine Trägereinheit zum Tragen eines als Sitzteil oder Rückenstruktur ausgebildeten Funktionsbauteils des Fluggastsitzes aufweist, wobei die Grundkörpereinheit als Teil der Trägereinheit ausgebildet ist. Insbesondere kann die Grundkörpereinheit von zumindest einem Stützelement zum Stützen des Funktionsbauteils gebildet sein, das mit dem Funktionsbauteil direkt gekoppelt ist.

In einer weiteren Ausführung ist denkbar, dass die Grundkörpereinheit von einem Funktionsbauteil des Fluggastsitzes, wie insbesondere von einem Sitzteil oder einer Rückenlehnenstruktur, gebildet ist. Hierbei kann die die Schnittstelle aufweisende Befestigungsvorrichtung direkt am Sitzteil und/oder an der Rückenlehnenstruktur befestigt sein.

Es wird außerdem vorgeschlagen, dass die Grundkörpereinheit bei einer Nutzung des Fluggastsitzes mit einem Flugzeugkabinenboden starr verbunden ist. Hierdurch kann mittels der Grundkörpereinheit vorteilhafterweise eine starre Verbindung zwischen der Schnittstelle und dem Flugzeugkabinenboden erreicht werden. Dies eignet sich insbesondere für Fluggastsitze, bei welchen zumindest der Sitzteil relativ zum Flugzeugkabinenboden fest ausgeführt ist. In einer alternativen Ausführung ist jedoch denkbar, dass die Grundkörpereinheit relativ zum Flugzeugkabinenboden beweglich ausgeführt ist. Dies eignet sich insbesondere für Fluggastsitze, bei welchen der Sitzteil relativ zum Flugzeugkabinenboden beweglich ausgeführt ist. Hierbei ist die Grundkörpereinheit vorteilhafterweise mit dem Sitzteil fest verbunden, wodurch die Befestigungsvorrichtung und ein damit befestigter Kindersitz Bewegungen des Sitzteils begleiten kann.

Eine besonders robuste Anordnung der Grundkörpereinheit und dadurch der Befestigungsvorrichtung kann erreicht werden, wenn die Grundkörpereinheit mit einer auf dem Flugzeugkabinenboden aufgeständerten Tragrohreinheit starr gekoppelt ist. Die Tragrohreinheit weist hierbei vorzugsweise ein Paar von parallelen Tragrohren auf, die sich parallel zum Flugzeugkabinenboden erstrecken und zur Verbindung von mehreren Fluggastsitzen in einer Sitzreihe dienen können.

Es können ferner Bauteile und Bauraum eingespart werden, wenn die Grundkörpereinheit von der Tragrohreinheit gebildet ist. Hierbei kann die Befestigungsvorrichtung direkt an der Tragrohreinheit befestigt sein. Ferner kann die Schnittstelle direkt an der Tragrohreinheit befestigt sein.

Es wird ferner vorgeschlagen, dass die Schnittstelle in einem relativ zu einer Flugrichtung definierten hinteren Bereich des Fluggastsitzes angeordnet ist, wodurch eine vorteilhafte Kompatibilität der Befestigungsvorrichtung mit gängigen Kindersitzen erreicht werden kann.

Der Bedienkomfort kann weiter erhöht werden, wenn die Schnittstelle dazu vorgesehen ist, im Zusammenwirken mit dem Befestigungsmittel ein Schnellverbindungssystem zur Befestigung des Kindersitzes zu bilden. Unter einem "Schnellverbindungssystem", welches von der Schnittstelle und dem Befestigungsmittel gebildet wird, soll insbesondere ein System verstanden werden, das zu einem werkzeuglosen Herstellen einer Befestigungsverbindung zwischen der Schnittstelle und dem Befestigungsmittel vorgesehen ist.

In einer bevorzugten Ausführung der Erfindung wird vorgeschlagen, dass die Schnittstelle zumindest ein Rastmittel aufweist, wodurch ein besonders geringer Aufwand bei der Befestigung des Kindersitzes erreicht werden kann. Insbesondere kann hierbei besonders einfach ein Schnellverbindungssystem erreicht werden, mit welchem ein Befestigungsvorgang realisiert werden kann, wobei auf eine manuelle Betätigung des Befestigungsmittels des Kindersitzes oder der Schnittstelle des Fluggastsitzes verzichtet werden kann. Besonders vorteilhaft kann die Befestigung lediglich durch eine vom Bediener angetriebene Bewegung des Kindersitzes relativ zur Schnittstelle durchgeführt werden. Unter einem "Rastmittel" soll insbesondere ein Mittel verstanden werden, das dazu vorgesehen ist, mit dem Befestigungsmittel eine Rastverbindung herzustellen.

In diesem Zusammenhang wird vorgeschlagen, dass das Rastmittel als Rastöffnung ausgebildet ist. Dadurch kann eine besonders einfache Anpassung an gängige Befestigungsmittel von Kindersitzen, insbesondere von im Automobilbereich angewendeten Kindersitzen, erreicht werden, die Greifmittel zum Eingreifen in die Rastöffnung aufweisen. Die Rastöffnung kann beispielsweise von einem Rastbügel, einer Rastöse usw. gebildet sein. Vorteilhafterweise kann dadurch die Befestigungsvorrichtung zum Einsatz von Kindersitzen mit genormten Befestigungsmitteln geeignet sein.

Ferner wird vorgeschlagen, dass die Schnittstelle dazu vorgesehen ist, mit zumindest einem Greifarm des Kindersitzes zusammenzuwirken, wodurch eine vorteilhafte Kompatibilität mit einer hohen Anzahl von Kindersitzmodellen erreicht werden kann.

Ein besonders geringer Aufwand bei der Befestigung des Kindersitzes kann erreicht werden, wenn der Fluggastsitz ein eine Sitzfläche bildendes Sitzteil aufweist, wobei die Befestigungsvorrichtung zur Befestigung des Kindersitzes in einer auf der Sitzfläche abgestützten Position vorgesehen ist. Hierbei kann eine Verbindung zwischen der Schnittstelle und dem Befestigungsmittel des Kindersitzes erreicht werden, wenn die Schnittstelle zumindest auf der Höhe der Sitzfläche relativ zu einem Flugzeugkabinenboden angeordnet ist.

In einer weiteren Ausbildung der Erfindung wird vorgeschlagen, dass der Fluggastsitz eine Rückenlehnenpolsterung und eine Sitzpolsterung aufweist, wobei die Schnittstelle im Kontaktbereich zwischen der Rückenlehnenpolsterung und der Sitzpolsterung angeordnet ist. Dadurch kann eine leicht zugängliche, jedoch optisch unauffällige Anordnung der Schnittstelle erreicht werden. Unter dem "Kontaktbereich" zwischen der Rückenlehnenpolsterung und der Sitzpolsterung soll insbesondere der Bereich verstanden werden, in welchem sich die Rückenlehnenpolsterung und die Sitzpolsterung berühren. In diesem Kontaktbereich berührt die Schnittstelle vorzugsweise die Rückenlehnenpolsterung und die Sitzpolsterung.

Ferner geht die Erfindung aus von einem Verfahren zur Befestigung eines Kindersitzes an einem Fluggastsitz. Es wird vorgeschlagen, dass der Kindersitz an einer mit einer Fluggastsitzgrundkörpereinheit starr verbundenen Schnittstelle des Fluggastsitzes befestigt wird, wodurch eine robuste und sichere Befestigung des Kindersitzes erreicht werden kann. Ferner kann der Bedienkomfort erhöht werden, da eine Justierung der Position der Schnittstelle relativ zur Fluggastsitzgrundkörpereinheit, die insbesondere bei einer Befestigung mittels eines Gurtsystems notwendig ist, entfallen kann.

Der Bedienkomfort kann weiter erhöht werden, wenn zu einer Befestigung der Kindersitz relativ zur Schnittstelle bewegt wird und die Bewegung das Betätigen eines Schnellverbindungssystems, insbesondere eines Rastsystems, bewirkt.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Fluggastsitz mit einem auf einer Sitzfläche angeordneten Kindersitz,
- Fig. 2: einen Teilbereich des Fluggastsitzes, mit einer Befestigungsvorrichtung zur Befestigung des Kindersitzes,
- Fig. 3: das Zusammenwirken eines Rastbügels der Befestigungsvorrichtung und eines Greifarms des Kindersitzes und
- Fig. 4: einen Teilbereich eines weiteren Fluggastsitzes mit einer alternativen Anordnung der Befestigungsvorrichtung an einem Tragrohr.

### Beschreibung der Ausführungsbeispiele

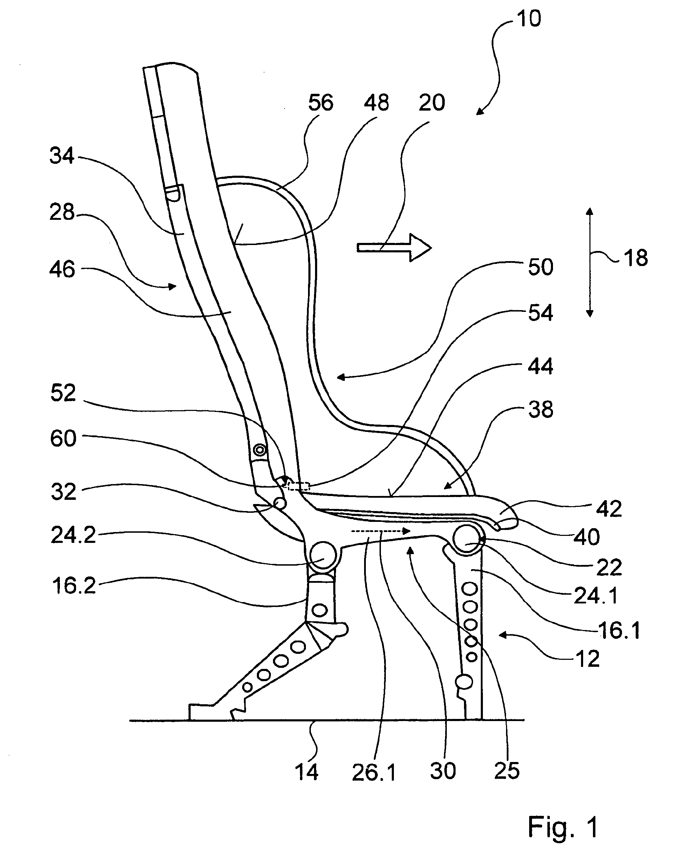

Figur 1 zeigt eine stark vereinfachte Darstellung eines Fluggastsitzes 10 in einer Seitenansicht. Der Fluggastsitz 10 weist eine Aufständereinheit 12 auf, welche einen Satz von Beinelementen 16 umfasst, die an einem Flugzeugkabinenboden 14 fixiert sind und sich im Wesentlichen in vertikaler Richtung 18 senkrecht zum Flugzeugkabinenboden 14 erstrecken. Die Beinelemente 16 bilden Paare, wobei ein Paar jeweils ein vorderes Beinelement 16.1, das relativ zu einer Flugrichtung 20 im vorderen Bereich des Fluggastsitzes 10 angeordnet ist, und ein hinteres Beinelement 16.2, das relativ zur Flugrichtung 20 im hinteren Bereich des Fluggastsitzes 10 angeordnet ist, umfasst. Im Eingriff mit den Beinelementen 16.1, 16.2 ist eine Tragrohreinheit 22 angeordnet, mit einem vorderen Tragrohr 24.1 im vorderen Bereich des Fluggastsitzes 10, das im Eingriff mit dem vorderen Beinelement 16.1 steht, und mit einem sich parallel zum vorderen Tragrohr 24.1 erstreckenden hinteren Tragrohr 24.2 im hinteren Bereich des Fluggastsitzes 10, das im Eingriff mit dem hinteren Beinelement 16.2 steht. Somit ist die Tragrohreinheit 22 mittels der Aufständereinheit 12 auf dem Flugzeugkabinenboden 14 aufgeständert. Die Tragrohre 24, die jeweils in einer Öffnung eines Beinelements 16 geführt sind, die am oberen Ende des jeweiligen Beinelements 16 ausgespart ist, erstrecken sich parallel zum Flugzeugkabinenboden 14. Mittels der Tragrohreinheit 22 können mehrere gattungsgemäße Fluggastsitze 10 miteinander verbunden werden. Insbesondere dient eine Tragrohreinheit 22 typischerweise zur Verbindung von Fluggastsitzen 10 miteinander, die eine senkrecht zur Flugrichtung 20 ausgerichtete Sitzreihe bilden.

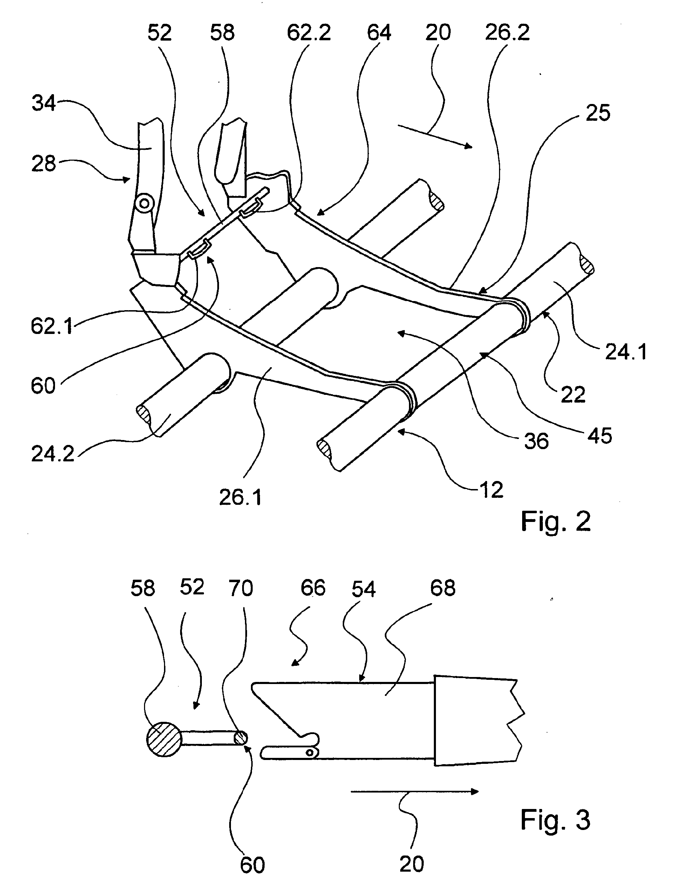

Die folgende Beschreibung bezieht sich auf Figur 1 und Figur 2, in welcher ein von den Beinelementen 16 getragener Teil des Fluggastsitzes 10 in einer perspektivischen Darstellung gezeigt ist. Der Fluggastsitz 10 weist ferner eine Trägereinheit 25 auf, die zum Tragen einer Rückenlehnenstruktur 28 vorgesehen ist. Hierzu weist die Trägereinheit 25 ein Paar von Stützelementen 26.1, 26.2 auf, die voneinander in einer Richtung senkrecht zur Flugrichtung 20 beabstandet, zueinander parallel ausgerichtet und mit der Tragrohreinheit 22 starr gekoppelt sind. In Figur 1 ist nur das Stützelement 26.1 sichtbar, während das Paar von Stützelementen 26.1, 26.2 in der perspektivischen Ansicht von Figur 2 zu sehen ist. Die Stützelemente 26 sind jeweils als ein längliches Bauteil ausgebildet, dessen Haupterstreckungsrichtung 30 parallel zum Flugzeugkabinenboden 14 und zur Flugrichtung 20 ausgerichtet ist. Sie weisen jeweils eine Lagerstelle 32 auf, mittels welcher die Rückenlehnenstruktur 28 an dem Stützelement 26 schwenkbar gelagert ist. Die Rückenlehnenstruktur 28 weist einen Rahmen 34 auf, welcher U-förmig ausgebildet ist und die Stützelemente 26.1, 26.2 miteinander verbindet (siehe Figur 2). Im vorderen und hinteren Bereich der Stützelemente 26 ist jeweils eine kreisförmige Öffnung ausgespart, in welcher das vordere Tragrohr 24.1 bzw. das hintere Tragrohr 24.2 geführt ist. Somit sind die Tragrohre 24.1. 24.2 durch ein Stützelement 26 miteinander verbunden. Die Stützelemente 26 dienen insbesondere dazu, eine auf die Rückenlehnenstruktur 28 ausgeübte Kraft auf die Tragrohreinheit 22 abzuleiten. Die Stützelemente 26 begrenzen ferner einen Sitzteilbereich 36 (Figur 2), in welchem ein in Figur 1 gezeigtes Sitzteil 38 angeordnet ist. Das Sitzteil 38 weist einen als Sitzschale ausgebildeten Sitzboden 40 und eine Sitzpolsterung 42 auf, die am Sitzboden 40 befestigt ist. Die Sitzpolsterung 42 bildet eine Sitzfläche 44. Der Sitzboden 40 ist mittels einer nicht näher dargestellten Befestigungsvorrichtung, die vorzugsweise eine Cliphalterung aufweist, an den Tragrohren 24 befestigt. Somit dient die Tragrohreinheit 22 als eine Trägereinheit 45 zum Tragen des Sitzteils 38. Im befestigten Zustand ist das Sitzteil 38 im Sitzteilbereich 36 zwischen zwei Stützelementen 26 angeordnet. An der Rückenlehnenstruktur 28 ist ferner eine Rückenlehnenpolsterung 46 angebracht, die eine Rückenlehnenfläche 48 bildet.

In der Ansicht von Figur 1 ist ferner ein Kindersitz 50 am Fluggastsitz 10 befestigt. Zur Befestigung des Kindersitzes 50 weist der Fluggastsitz 10 eine Befestigungsvorrichtung 52 auf, die in Figur 1 stark schematisch dargestellt ist und im festen Eingriff mit einem Befestigungsmittel 54 des Kindersitzes 10 steht. Die Befestigungsvorrichtung 52 wird unten anhand der Figur 2 näher dargestellt. Die Befestigungsvorrichtung 52 ist durch ihre Anordnung relativ zum Sitzteil 38 dazu vorgesehen, den Kindersitz 50 im befestigten Zustand in einer auf der Sitzfläche 44 abgestützten Position zu befestigen. Der Kindersitz 50 weist ferner eine Rückenlehne 56 auf, die im befestigten Zustand des Kindersitzes 50 am Fluggastsitz 10, und zwar an der Rückenlehnenfläche 48 des Fluggastsitzes 10 anliegt.

Wie der Figur 2 zu entnehmen ist, weist die Befestigungsvorrichtung 52 ein Tragmittel 58 auf, welches eine Schnittstelle 60 zum Anschließen an das Befestigungsmittel 54 des Kindersitzes 50 trägt. Unter der Schnittstelle 60 soll derjenige Teil der Befestigungsvorrichtung 52 verstanden werden, der bei der Befestigung des Kindersitzes 50 in Berührung mit dem Befestigungsmittel 54 des Kindersitzes 50 kommt. Die Schnittstelle 60 weist zwei als Rastmittel 62.1, 62.2 ausgebildete Befestigungselemente auf, die in einer Richtung senkrecht zur Flugrichtung 20 voneinander beabstandet sind. Weitere, dem Fachmann als sinnvoll erscheinende Ausbildungen der Befestigungselemente sind denkbar. Die Rastmittel 62.1, 62.2 können vom Tragmittel 58 getrennt hergestellt sein oder sie können mit dem Tragmittel 58 einstückig ausgebildet sein. Das Tragmittel 58 der Befestigungsvorrichtung 52, das im voriiegenden Ausführungsbeispiel als Stange ausgebildet ist, ist an den einander gegenüberliegenden Stützelementen 26.1, 26.2 befestigt. Demnach bilden die Stützelemente 26.1, 26.2 eine Grundkörpereinheit 64 des Fluggastsitzes 10, an welcher die Befestigungsvorrichtung 52 befestigt ist. Mehrere, dem Fachmann als sinnvoll erscheinende Befestigungsarten zur Befestigung der Befestigungsvorrichtung 52 an der Grundkörpereinheit 64, wie z.B. eine Schweißverbindung, eine Formschlussverbindung, insbesondere eine Rastverbindung oder eine Schraubverbindung, sind denkbar. Mit der Befestigung der Befestigungsvorrichtung 52, und zwar des als starrer Körper ausgebildeten Tragmittels 58 an der Grundkörpereinheit 64 ist die Schnittstelle 60 mit der Grundkörpereinheit 64 starr verbunden. Die Grundkörpereinheit 64 ist Teil der Trägereinheit 25. Da diese Trägereinheit 25 an der Tragrohreinheit 22 befestigt ist, welche selbst über die Beinelemente 16 am Flugzeugkabinenboden 14 aufgeständert ist und mit diesem starr verbunden ist, entsteht eine starre Verbindung zwischen der Grundkörpereinheit 64 und dem Flugzeugkabinenboden 14. Dadurch entsteht zwischen der Schnittstelle 60 und dem Flugzeugkabinenboden 14 eine starre Verbindung, wodurch vorteilhaft im befestigten Zustand des Kindersitzes 50 eine starre Verbindung zwischen dem Kindersitz 50 und dem Flugzeugkabinenboden 14 hergestellt werden kann. Durch die Ausbildung der Grundkörpereinheit 64 als Stützelement 26.1, 26.2 ist diese mit beiden Tragrohren 24.1, 24.2 der Tragrohreinheit 22 starr gekoppelt, wodurch eine besonders hohe Stabilität bei einem Befestigungsvorgang mit dem Kindersitz 50 erreicht werden kann.

Die Schnittstelle 60 der Befestigungsvorrichtung 52 ist gezielt ausgebildet, um mit dem Befestigungsmittel 54 des Kindersitzes 50 ein Schnellverbindungssystem 66 zu einem schnellen, insbesondere werkzeuglosen Befestigen des Kindersitzes 50 zu bilden. Durch das Schnellverbindungssystem 66 kann eine sichere Befestigungsverbindung einfach durch eine relative Bewegung des Befestigungsmittels 54 des Kindersitzes 50 zur Schnittstelle 60 hergestellt werden, ohne dass weitere Montageschritte vom Bediener, insbesondere eine manuelle Betätigung des Befestigungsmittels 54, eingeleitet werden müssen. Hierbei wirken das Befestigungsmittel 54 des Kindersitzes 50 und die Schnittstelle 60 des Fluggastsitzes 10 derart zusammen, dass diese Bewegung das automatische Betätigen des Schnellverbindungssystems 66 bewirkt. Die Schnittstelle 60, welche die beiden Rastmittel 62.1, 62.2 aufweist, ist dazu vorgesehen, mit dem Befestigungsmittel 54 eine Rastverbindung herzustellen. Ferner ist sie dazu angepasst, mit einem System von Greifarmen 68 des Kindersitzes 50 zusammenzuwirken. Hierzu sind die Rastmittel 62.1, 62:2 jeweils als Rastöffnungen, insbesondere in der Form von Rastbügeln, ausgebildet, die am Tragmittel 58 angeordnet sind. Die voneinander beabstandeten Rastbügel kommen bei einem Befestigen des Kindersitzes 50 in Eingriff mit zwei Greifarmen 68 des Kindersitzes 50. Dies ist in Figur 3 dargestellt, welche das Umgreifen eines Rastbügels durch einen Greifarm 68 des Kindersitzes 50 zeigt. Insbesondere ist ein sich parallel zum Tragmittel 58 erstreckender, vom Tragmittel 58 in Flugrichtung 20 beabstandeter Teilbereich 70 des Rastbügels vom Greifarm 68 umgriffen.

Im montierten Zustand des Fluggastsitzes 10 ist die Schnittstelle 60 im hinteren Bereich des Fluggastsitzes 10 angeordnet. Insbesondere befindet sich die Schnittstelle 60 in einem Bereich, welcher bezüglich der Vertikalrichtung 18 oberhalb des hinteren Tragrohrs 24.2 angeordnet ist. Wie Figur 1 entnommen werden kann, ist die Schnittstelle 60 zwischen der Sitzpolsterung 42 und der Rückenlehnenpolsterung 46 angeordnet. Aufgrund dieser im Kontaktbereich der Rückenlehnenpolsterung 46 mit der Sitzpolsterung 42 versteckten Anordnung der Schnittstelle 60 ist diese für eine vor dem Fluggastsitz 10 stehende Person nicht sichtbar. Die Position der Schnittstelle 60 in Flugrichtung 20 relativ zur vorderen Kante des Sitzteils 38 ist derart gewählt, dass diese außerhalb des Sitzbereichs des Fluggastsitzes 10 angeordnet ist, so dass der Komfort für eine sitzende Person nicht beeinträchtigt wird. Im vorliegenden Beispiel ist die Schnittstelle 60 ferner auf einer Höhe relativ zum Flugzeugkabinensitzboden 14 angeordnet, die derart gewählt ist, dass die Schnittstelle 60 auf der Höhe der Sitzfläche 44 liegt, so dass die Greifarme 68 des Kindersitzes 50 in Eingriff mit den Rastmitteln 62 kommen, wenn dieser entlang der Sitzfläche 44 geschoben wird. Dies eignet sich für gängige Kindersitze, bei welchen die Greifarme 68 eine Fortführung der Unterseite des Sitzteils des Kindersitzes darstellen. Eine Anordnung der Schnittstelle 60 in weiteren Bereichen, die gezielt für weitere Typen von Kindersitzen gewählt ist, ist ebenfalls denkbar.

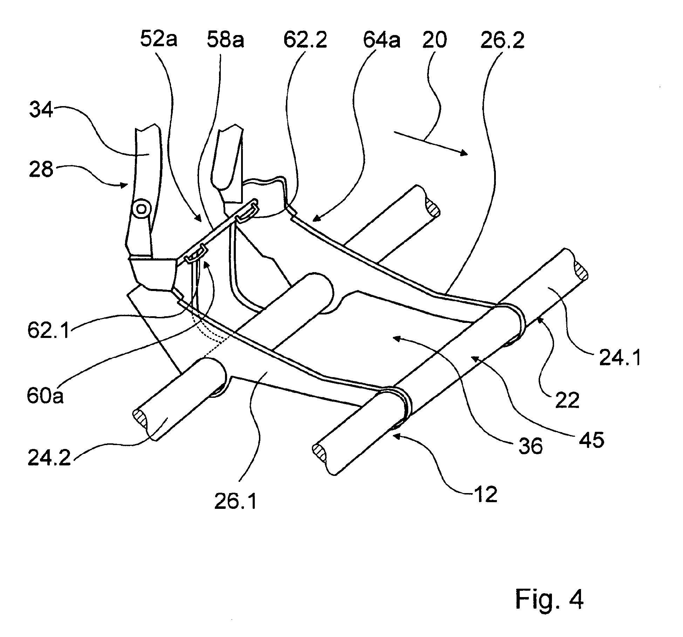

In Figur 4 ist ein alternatives Ausführungsbeispiel eines erfindungsgemäßen Fluggastsitzes 10 gezeigt. Der Übersichtlichkeit halber werden Bauteile, die die gleiche Funktion haben wie beim obigen Ausführungsbeispiel, mit dem gleichen Bezugszeichen bezeichnet, wobei zur Verdeutlichung eines Unterschieds in der Ausbildung dem Bezugszeichen der Buchstabe a hinzugefügt wird. Um Wiederholungen zu vermeiden, beschränkt sich die folgende Beschreibung auf die Unterschiede zum obigen Ausführungsbeispiel.

In dieser weiteren Ausführungsvariante ist eine Befestigungsvorrichtung 52a zur Befestigung des Kindersitzes 50 an der Tragrohreinheit 22 befestigt, und zwar ist sie mit dem hinteren Tragrohr 24.2 der Tragrohreinheit 22 direkt gekoppelt. In dieser Konfiguration bildet die Tragrohreinheit 22 eine Grundkörpereinheit 64a, an welcher die Befestigungsvorrichtung 52a befestigt ist. Die Befestigungsvorrichtung 52a weist eine Schnittstelle 60a auf, die ebenfalls zwei voneinander beabstandete, als Rastmittel 62 ausgebildete Befestigungselemente aufweist. Diese Rastmittel 62 sind über ein am hinteren Tragrohr 24.2 befestigtes Tragmittel 58a mit der Grundkörpereinheit 64a starr verbunden. Die Grundkörpereinheit 64a ist mit der Tragrohreinheit 22 einstückig ausgebildet und stellt demnach einen Teil der Trägereinheit 45 zum Tragen des Sitzteils 38 dar.

In den oben ausgeführten Ausführungsbeispielen ist die Grundkörpereinheit 64 jeweils mit dem Flugzeugkabinenboden 14 starr verbunden. Hierdurch kann - insbesondere im Hinblick auf herkömmliche Befestigungen von Kindersitzen mittels eines Gurtsystems - eine erhöhte Sicherheit in der Befestigung eines Kindersitzes erreicht werden.

In weiteren Ausführungen eines Fluggastsitzes 10, insbesondere bei Fluggastsitzen in einer gehobenen Komfortkategorie, kann das Sitzteil 38 relativ zum Flugzeugkabinenboden 14 beweglich angeordnet sein. Hierbei ist es vorteilhaft, wenn die Grundkörpereinheit, mit welcher die Befestigungsvorrichtung 52 starr verbunden ist, mit dem Sitzteil 38 starr verbunden ist. Dadurch kann ein auf der vom Sitzteil 38 gebildeten Sitzfläche 44 angeordneter Kindersitz 50 bei Bewegungen des Sitzteils 38 relativ zum Flugzeugkabinenboden 14 dessen Bewegungen begleiten.

### Bezugszeichen

| | | | |
|---|---|---|---|
| 10 | Fluggastsitz | 45 | Trägereinheit |
| 12 | Aufständereinheit | 46 | Rückenlehnenpolsterung |
| 14 | Flugzeugkabinenboden | 48 | Rückenlehnenfläche |
| 16 | Beinelement | 50 | Kindersitz |
| 18 | Vertikalrichtung | 52 | Befestigungsvorrichtung |
| 20 | Flugrichtung | 52a | Befestigungsvorrichtung |
| 22 | Tragrohreinheit | 54 | Befestigungsmittel |
| 24 | Tragrohr | 56 | Rückenlehne |
| 25 | Trägereinheit | 58 | Tragmittel |
| 26 | Stützelement | 58a | Tragmittel |
| 28 | Rückenlehnenstruktur | 60 | Schnittstelle |
| 30 | Haupterstreckungsrichtung | 60a | Schnittstelle |
| 32 | Lagerstelle | 62 | Rastmittel |
| 34 | Rahmen | 64 | Grundkörpereinheit |
| 36 | Sitzteilbereich | 64a | Grundkörpereinheit |
| 38 | Sitzteil | 66 | Schnellverbindungssystem |
| 40 | Sitzboden | 68 | Greifarm |
| 42 | Sitzpolsterung | 70 | Teilbereich |
| 44 | Sitzfläche | | |

## Patentansprüche

1. Fluggastsitz mit zumindest einem Funktionsbauteil, das als Sitzteil (38) oder Rückenlehnenstruktur (28) ausgebildet ist, zumindest einer Trägereinheit (25, 45) zum Tragen des Funktionsbauteils, einer Aufständereinheit (12) zur Aufständerung der Trägereinheit (25, 45) auf einem Flugzeugkabinenboden (14) und mit einer Befestigungsvorrichtung (52; 52a), die zur Befestigung eines Kindersitzes (50) vorgesehen ist, **dadurch gekennzeichnet, dass** die Befestigungsvorrichtung (52; 52a) ein Tragmittel (58) mit einer Schnittstelle (60; 60a) zum Anschließen an ein Befestigungsmittel (54) des Kindersitzes (50) aufweist und das Tragmittel (58) mit der Trägereinheit (25, 45) direkt und starr verbunden ist.

2. Fluggastsitz nach Anspruch 1, **dadurch gekennzeichnet, dass** die Trägereinheit (25, 45) von einer Tragrohreinheit (22) gebildet ist.

3. Fluggastsitz nach Anspruch 1, **dadurch gekennzeichnet, dass** die Trägereinheit (25, 45) zumindest zwei Stützelemente (26.1, 26.2) aufweist, die zueinander parallel ausgerichtet und voneinander in einer Richtung senkrecht zu einer Flugrichtung (20) beabstandet sind.

4. Fluggastsitz zumindest nach Anspruch 3, **dadurch gekennzeichnet, dass** die zumindest zwei Stützelemente (26.1, 26.2) einen Sitzteilbereich des Sitzteils (38) begrenzen.

5. Fluggastsitz nach einem der vorhergehenden Ansprüche, **gekennzeichnet durch** einen relativ zu der Flugrichtung (20) definierten hinteren Bereich, in welchem die Schnittstelle (60; 60a) angeordnet ist.

6. Fluggastsitz nach einem der vorhergehenden Ansprüche, **dadurch gekennzeichnet, dass** die Schnittstelle (60; 60a) dazu vorgesehen ist, im Zusammenwirken mit dem Befestigungsmittel (54) ein Schnellverbindungssystem (66) zur Befestigung des Kindersitzes (50) zu bilden.

7. Fluggastsitz nach einem der vorhergehenden Ansprüche, **dadurch gekennzeichnet, dass** die Schnittstelle (60; 60a) zumindest ein Rastmittel (62) aufweist.

8. Fluggastsitz nach Anspruch 7, **dadurch gekennzeichnet, dass** das Rastmittel (62) als Rastöffnung ausgebildet ist.

9. Fluggastsitz nach einem der vorhergehenden Ansprüche, **dadurch gekennzeichnet, dass** die Schnittstelle (60; 60a) dazu vorgesehen ist, mit zumindest einem Greifarm (68) des Kindersitzes (50) zusammenzuwirken.

10. Fluggastsitz nach einem der vorhergehenden Ansprüche, **dadurch gekennzeichnet, dass** das Sitzteil (38) eine Sitzfläche (44) bildet, wobei die Befestigungsvorrichtung (52; 52a) zur Befestigung des Kindersitzes (50) in einer auf der Sitzfläche (44) abgestützten Position vorgesehen ist.

11. Fluggastsitz nach einem der vorhergehenden Ansprüche, **gekennzeichnet durch** eine Rückenlehnenpolsterung (46) und eine Sitzpolsterung (42), wobei die Schnittstelle (60; 60a) im Kontaktbereich zwischen der Rückenlehnenpolsterung (46) und der Sitzpolsterung (42) angeordnet ist.

12. System mit einem Fluggastsitz (10) nach einem der vorhergehenden Ansprüche und einem Kindersitz (50), welcher ein Kindersitzbefestigungsmittel (54) aufweist, das zu einem Zusammenwirken mit der Schnittstelle (60; 60a) geeignet ist.

13. Verfahren zur Befestigung eines Kindersitzes (50) an einem Fluggastsitz (10), insbesondere nach einem der Ansprüche 1 bis 11, **dadurch gekennzeichnet, dass** der Kindersitz (50) an einer mit einer direkt und starr mit der Trägereinheit (25, 45) verbundenen Schnittstelle (60; 60a) des Fluggastsitzes (10) befestigt wird.

14. Verfahren nach Anspruch 13, **dadurch gekennzeichnet, dass** zu einer Befestigung der Kindersitz (50) relativ zur Schnittstelle (60; 60a) bewegt wird und die Bewegung das Betätigen eines Schnellverbindungssystems (66), insbesondere eines Rastsystems, bewirkt.

## Claims

1. Air passenger seat with at least one functional component which is implemented as a seat part (38) or backrest structure (28), at least one carrier unit (25, 45) for carrying the functional component, a mounting unit (12) for mounting the carrier unit (25, 45) on an aircraft cabin floor (14), and with a fastening device (52; 52a) which is provided for fastening a child seat (50), **characterized in that** the fastening device (52; 52a) has a carrying means (58) with an interface (60; 60a) for connecting to a fastening means (54) of the child seat (50) and that said carrying means (58) is directly and rigidly connected to the carrier unit (25, 45).

2. Air passenger seat according to Claim 1, **characterized in that** the carrier unit (25, 45) is formed by a carrying tube unit (22).

3. Air passenger seat according to Claim 1, **characterized in that** the carrier unit (25, 45) has at least two support elements (26.1, 26.2) which are oriented parallel to one another and which are spaced apart from one another in a direction perpendicular to a flight direction (20).

4. Air passenger seat at least according to Claim 3, **characterized in that** the at least two support elements (26.1, 26.2) delimit a seat part region of the seat part (38).

5. Air passenger seat according to one of the preceding claims, **characterized by** a rear region which is defined relative to the flight direction (20) and in which the interface (60; 60a) is arranged.

6. Air passenger seat according to one of the preceding claims, **characterized in that** the interface (60; 60a) is provided to form, in interaction with the fastening means (54), a rapid connection system (66) for fastening the child seat (50).

7. Air passenger seat according to one of the preceding claims, **characterized in that** the interface (60; 60a) has at least one latching means (62).

8. Air passenger seat according to Claim 7, **characterized in that** the latching means (62) is implemented as a latching opening.

9. Air passenger seat according to one of the preceding claims, **characterized in that** the interface (60; 60a) is provided to interact with at least one gripping arm (68) of the child seat (50).

10. Air passenger seat according to one of the preceding claims, **characterized in that** the seat part (38) forms a seat surface (44), the fastening device (52; 52a) being provided for fastening the child seat (50) in a position supported on the seat surface (44).

11. Air passenger seat according to one of the preceding claims, **characterized by** a backrest padding (46) and a seat padding (42), the interface (60; 60a) being arranged in the contact region between the backrest padding (46) and the seat padding (42).

12. System with an air passenger seat (10) according to one of the preceding claims and with a child seat (50) which has a child seat fastening means (54) which is suitable for interaction with the interface (60; 60a).

13. Method for fastening a child seat (50) to an air passenger seat (10), in particular according to one of Claims 1 to 11, **characterized in that** the child seat (50) is fastened to an interface (60; 60a) of the air passenger seat (10), which interface (60; 60a) is directly and rigidly connected to the carrier unit (25, 45).

14. Method according to Claim 13, **characterized in that**, for fastening purposes, the child seat (50) is moved relative to the interface (60; 60a) and that the movement causes the actuation of a rapid connection system (66), in particular a latching system.

## Revendications

1. Siège de passager d'aéronef comprenant au moins un composant fonctionnel réalisé sous forme de partie de siège (38) ou de structure de dossier (28), au moins une unité porteuse (25, 45) pour supporter le composant fonctionnel, une unité de positionnement (12) pour positionner l'unité porteuse (25, 45) sur un sol (14) de la cabine d'aéronef et comprenant un dispositif de fixation (52 ; 52a), qui est prévu pour fixer un siège d'enfant (50), **caractérisé en ce que** le dispositif de fixation (52 ; 52a) présente un moyen de support (58) avec une interface (60 ; 60a) pour le raccordement à un moyen de fixation (54) du siège d'enfant (50) et **en ce que** le moyen de support (58) est connecté directement et rigidement à l'unité porteuse (25, 45).

2. Siège de passager d'aéronef selon la revendication 1, **caractérisé en ce que** l'unité porteuse (25, 45) est formée par une unité porteuse tubulaire (22).

3. Siège de passager d'aéronef selon la revendication 1, **caractérisé en ce que** l'unité porteuse (25, 45) présente au moins deux éléments d'appui (26.1, 26.2) qui sont orientés parallèlement les uns aux autres et qui sont espacés les uns des autres dans une direction perpendiculaire à une direction de vol (20).

4. Siège de passager d'aéronef selon la revendication 3, **caractérisé en ce que** les au moins deux éléments d'appui (26.1, 26.2) délimitent une région de partie de siège de la partie de siège (38).

5. Siège de passager d'aéronef selon l'une quelconque des revendications précédentes, **caractérisé par** une région arrière définie par rapport à la direction de vol (20), dans laquelle région est disposée l'interface (60 ; 60a).

6. Siège de passager d'aéronef selon l'une quelconque des revendications précédentes, **caractérisé en ce que** l'interface (60 ; 60a) est prévue pour former, conjointement avec le moyen de fixation (54), un système de raccord rapide (66) pour la fixation du siège d'enfant (50).

7. Siège de passager d'aéronef selon l'une quelconque des revendications précédentes, **caractérisé en ce que** l'interface (60 ; 60a) présente au moins un moyen d'encliquetage (62).

8. Siège de passager d'aéronef selon la revendication 7, **caractérisé en ce que** le moyen d'encliquetage (62) est réalisé sous forme d'ouverture d'encliquetage.

9. Siège de passager d'aéronef selon l'une quelconque des revendications précédentes, **caractérisé en ce que** l'interface (60 ; 60a) est prévue pour coopérer avec au moins un bras de préhension (68) du siège d'enfant (50).

10. Siège de passager d'aéronef selon l'une quelconque des revendications précédentes, **caractérisé en ce que** la partie de siège (38) forme une surface de siège (44), le dispositif de fixation (52 ; 52a) étant prévu pour fixer le siège d'enfant (50) dans une position supportée sur la surface de siège (44).

11. Siège de passager d'aéronef selon l'une quelconque des revendications précédentes, **caractérisé par** un rembourrage de dossier (46) et un rembourrage de siège (42), l'interface (60 ; 60a) étant disposée dans la région de contact entre le rembourrage de dossier (46) et le rembourrage de siège (42).

12. Système comprenant un siège de passager d'aéronef (10) selon l'une quelconque des revendications précédentes et un siège d'enfant (50), qui présente un moyen de fixation de siège d'enfant (54) qui est approprié pour coopérer avec l'interface (60 ; 60a).

13. Procédé de fixation d'un siège d'enfant (50) à un siège de passager d'aéronef (10), en particulier selon l'une quelconque des revendications 1 à 11, **caractérisé en ce que** le siège d'enfant (50) est fixé à une interface (60 ; 60a) du siège de passager d'aéronef (10) raccordée directement et rigidement à l'unité porteuse (25, 45).

14. Procédé selon la revendication 13, **caractérisé en ce que** pour la fixation, le siège d'enfant (50) est déplacé par rapport à l'interface (60 ; 60a) et **en ce que** le mouvement provoque l'actionnement d'un système de raccord rapide (66), en particulier d'un système d'encliquetage.
